# EUROPEAN PATENT SPECIFICATION

(11) **EP 1 314 616 B1**
(45) Date of publication and mention of the grant of the patent: **01.03.2006**
(21) Application number: 02024987.6
(22) Date of filing: 07.11.2002
(51) Int. Cl.: B60R 21/16

(54) **Passenger-side airbag apparatus**
Beifahrerseite-Airbag Vorrichtung
Dispositif d'airbag côté passager

(30) Priority: 22.11.2001 JP 2001357914
(43) Date of publication of application: 28.05.2003
(73) Proprietor: TAKATA CORPORATION, Minato-ku, Tokyo 106-8510 (JP)
(72) Inventor: Amamori, Ichiro, Minato-ku, Tokyo 106-8510 (JP)
(74) Representative: Banzer, Hans-Jörg

(56) References cited:
- DE-A- 19 860 823
- US-A- 5 310 214
- US-A- 5 513 877
- US-B1- 6 308 983

## Description

### [Technical Field of the Invention]

The present invention relates to a passenger-side airbag apparatus which is installed in an instrument panel of a vehicle and, in an emergency such as a car crash, which expands into the space between a windshield of the vehicle and a passenger sitting in the front passenger seat of the vehicle so as to protect the passenger.

### [Description of the Related Art]

A passenger-side airbag apparatus is generally installed in an instrument panel of a vehicle in a state such that a passenger-side airbag is housed in a container-shape retainer and covered by a lid fixed to the retainer. The retainer has an inflator therein which produces gas for inflating the airbag.

In an emergency such as a car crash, the passenger-side airbag is caused to inflate by the gas flowing from the inflator, pushes the lid out, and expands dramatically into a passenger compartment so as to receive a passenger who suddenly moves forward by a shock due to a car crash or the like.

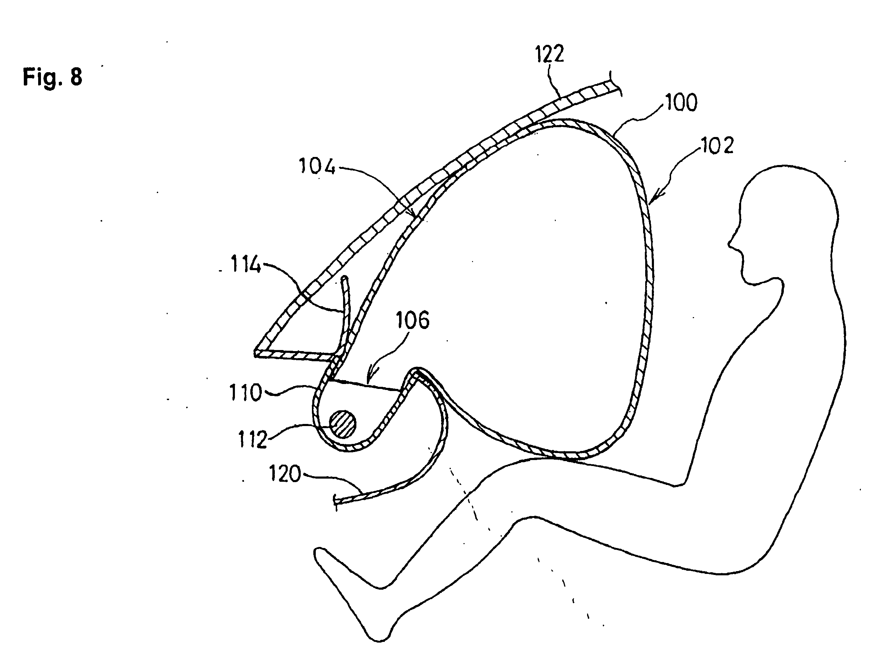

Fig. 8 is a sectional view of a conventional passenger-side airbag apparatus in which a passenger-side airbag 100 expands.

The expanded passenger-side airbag 100 has an approximate cone shape tapered to the rear part (shown in the left side in Fig. 8, and hereinafter, shown in the same manner) thereof. The passenger-side airbag 100 has a front part (shown in the right side in Fig. 8, and hereinafter, shown in the same manner) serving as a passenger-opposing surface 102, which faces the passenger and has a sufficient area so as to receive the passenger when the airbag 100 expands in an emergency such as a car crash. Also, when the airbag is expanded, the airbag 100 having an upper part (shown in the upper side in Fig. 8, and hereinafter, shown in the same manner) is served as a wind shield-opposing surface 104 which faces a wind shield 122 installed at the front portion of a car body.

The airbag 100 has an opening 106 at the rear part thereof, the periphery of which is connected to that of an opening disposed at the front part of a container-shape retainer 110. The retainer 110 has an inflator 112 therein, and gas flowing from the inflator 112 is introduced into the airbag 100 through these openings. The airbag 100 is housed in the retainer 110 in a folded state. Then, a lid 114 is fixed to the opening of the retainer 100 and the retainer 100 is installed in an instrument panel 120 of a vehicle.

In an emergency such as a car crash, the gas flowing from the actuated inflator 112 causes the airbag 100 to inflate, push the lid 114 out, and expand in a passenger compartment.

The airbag 100 expanded into the passenger compartment inflates dramatically into the space between the wind-shield 122 and the passenger in a manner such that the passenger-opposing surface 102 bulges out so as to face the passenger and to be then ready to receive the passenger and also such that the wind-shield-opposing surface 104 bulges out along the wind-shield 122 so as to face the wind-shield 122. When the passenger crashes into the passenger-opposing surface 102 and strongly presses the airbag 100, the wind-shield-opposing surface 104 abuts against the wind-shield 122 and is thus securely supported by it so that the airbag 100 reliably receives the passenger.

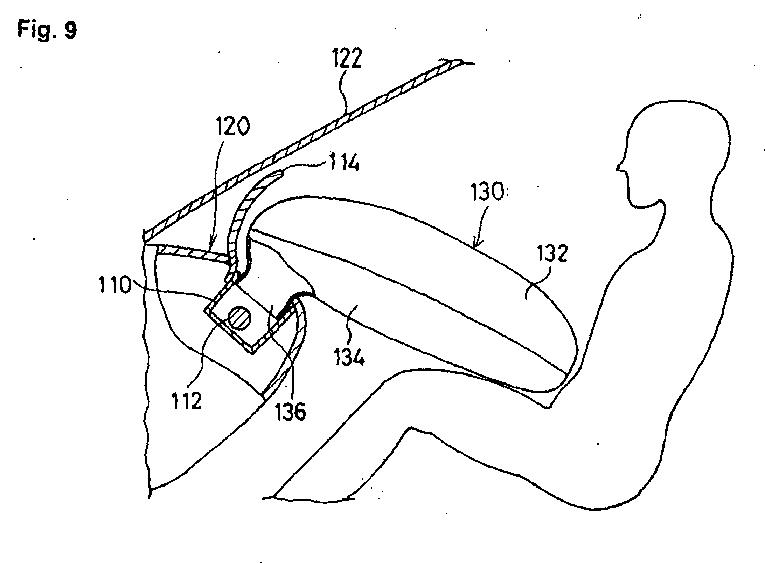

The airbag 100 is relatively of high grade, that is, has a structure in which three or more panels for forming the wind-shield-opposing surface 104, the passenger-opposing surface 102, the lower surface thereof facing the instrument panel 120, the right and left surfaces thereof, and so forth are three-dimensionally sewed so that the airbag 100 has an approximate cone shape and the upper surface thereof faces the wind-shield 122 when it expands. An airbag 130 shown in Fig. 9 manufactured from only two panels is also on the market as a passenger-side airbag of relatively low-priced type.

The airbag 130 has two panels, i.e., an upper panel 132 and a lower panel 134 respectively serving as the upper half and the lower half thereof when it expands, so as to form a bag by overlapping these panels with each other and stitching their peripheries together. The lower panel 134 has an opening 136 at the rear part thereof for introducing the gas in the inflator 112 into the airbag 130.

The airbag 130 is connected to the retainer 110 by bonding the periphery of the opening 136 formed at the rear part of the lower panel 134 to that of the periphery of the opening formed at the front part of the retainer 110. Since the other configuration of the airbag apparatus having the airbag 130 is the same as that of the above-described airbag apparatus shown in Fig. 8, like parts in Fig. 9 are identified by the same reference numerals as in Fig. 8 and their description is omitted.

When the inflator 112 is activated in a car crash, the gas is introduced into the airbag 130 through the opening 136, and the airbag 130 pushes the lid 114 out, inflates into the passenger compartment, and expands from the upper surface of the instrument panel 120 toward the passenger so as to be ready to receive the passenger, as shown in Fig. 9.

### [Problems to be Solved by the Invention]

Since the above-described passenger-side airbag 100 is required to widely expand so as to fill in the space among the passenger, the wind-shield 122, and the instrument panel 120, and also required to surely receive the passenger, the airbag tends to have a large volume. Therefore, various means have been implemented so that an airbag having such a large volume can complete its inflation soon after starting the inflation.

As one of the means, the inflator 112 as a gas producing source for inflating the airbag 100 is provided with an increased capacity. However, such an inflator having a large capacity is expensive. In addition, since the airbag and fixtures used for fixing the inflator experience large stresses, these components are required to have sufficient strengths. Accordingly, this means is not preferable from the viewpoint of cost, weight, and so forth.

Whereat, for example, by connecting the passenger-opposing surface 102 of the airbag 100 to the periphery of the gas-flow opening 106 formed at the rear part of the airbag fixed to the retainer with a strap or the like so that the inflation of the passenger-opposing surface is constrained and thus so that the volume of the airbag decreases, the airbag can complete its inflation soon after starting the inflation even with an inflator having a relatively small capacity.

However, this means for reducing the volume of the airbag by restricting its inflation, e.g., constraining the inflation of the passenger-opposing surface as described-above, causes the distance between the passenger-opposing surface of the completely expanded airbag and the passenger to become large.

Also, in the foregoing airbag 100, since three-dimensional sewing of three or more panels is required in order to form the surfaces of the airbag 100, its manufacturing is quite troublesome and also costly. Furthermore, the equipment expenses for manufacturing the airbag 100 are likely to become large.

Whereat, since the foregoing airbag 130 is formed only by two panels, only things to manufacture it are to overlap these panels with each other and to two-dimensionally stitch the peripheries thereof. As a result, its manufacturing is very easy and its manufacturing cost including the equipment expenses and so forth is small.

However, in the airbag 130 formed from two panels which are two-dimensionally sewed together, since the outer surface of the airbag 130 is unlikely to sufficiently face the inner surface of the passenger compartment such as the wind-shield 122 when the airbag expands, the airbag 130 has a risk of behaving unstably while inflating and when completed its inflation.

Furthermore, US 5,310,214 A discloses an airbag system located on an instrument panel of a vehicle. The airbag system includes an inflatable airbag stored in a folded condition within the instrument panel. The inflated airbag comprises an upper chamber extending upwardly between a windshield of the vehicle and an adult on the front seat of the vehicle, and a lower chamber disposed below the upper chamber between the instrument panel and a child. Thus, a portion of the inflated airbag containing the upper chamber is positioned to restrain movement of the adult, while a portion of the airbag containing the lower chamber is positioned to restrain movement of the child. The airbag system includes a pair of two separate gas sources, the one gas source providing a relatively large volume of gas sufficient to inflate the upper chamber to a relatively high pressure, and the other gas source providing a relatively small volume of gas sufficient to inflate the lower chamber. The upper chamber is not connected in fluid communication with the lower chamber.

A first object of a present invention is to provide a passenger-side airbag apparatus which solves the above-described problems, which has a sufficient shock-absorbing performance, and which quickly completes its inflation without increasing the capacity of an inflator.

A second object of the present invention is to provide a passenger-side airbag apparatus which behaves stable while inflating and when completed its inflation.

### [Means for solving the problems]

According to the present invention, this object is achieved by a passenger-side airbag apparatus as defined in independent claim 1.

In such a passenger-side airbag apparatus according to the present invention, when an inflator is activated in an emergency such as a car crash and the gas from the inflator causes the first and second bags to inflate, only the second bag substantially faces and receives the upper body of the passenger. Since the first bag does not directly come into contact with the passenger, its lateral width can be made small.

By making the lateral width of the first bag small as defined in claim 1, the volume of the whole airbag becomes small, thereby allowing the airbag to quickly complete its inflation without increasing the capacity of the inflator.

According to the present invention, the first bag may be formed such that two panels serving as the upper half and the lower half of the expanded bag are two-dimensionally stitched together, and a gas-inflow opening or a connecting portion to the retainer is disposed at the rear part of the surface of the lower half. With this structure, the first bag can be manufactured easily and also at low cost, and, as a result, the whole airbag can be manufactured relatively easily and also at low cost. Although the conventional airbag 130 has a risk of behaving unstably while inflating and when completed its inflation, the whole expanded airbag according to the present invention behaves stably since the second bag, which inflates together with the first bag, abuts against the upper portion of the wind shield or the ceiling of the passenger compartment.

### [Brief Description of the Drawings]

Fig. 1 is a sectional view of the front portion of a vehicle in front of its front passenger seat, for illustrating the configuration of a passenger-side airbag apparatus according to an embodiment of the present invention.
Fig. 2 is a top view of the expanded airbag viewed from the plane taken along the line II - II indicated in Fig. 1.
Fig. 3 is a front view of the expanded airbag viewed from the plane taken along the line III - III indicated in Fig. 1.
Fig. 4 includes a plan view and a sectional view of the airbag in Fig. 1, which is flatly unfolded in an unexpanded state.
Fig. 5 is a sectional view of the front portion of a vehicle in front of its front passenger seat, for illustrating the configuration of a passenger-side airbag apparatus according to another embodiment of the present invention.
Fig. 6 is a plan view of the airbag in Fig. 5, which is flatly unfolded in an unexpanded state.
Fig. 7 is an exploded perspective view of an airbag according to another embodiment of the present invention.
Fig. 8 is a sectional view of the front portion of a vehicle in front of its front passenger seat, for illustrating the configuration of a conventional passenger-side airbag apparatus.
Fig. 9 is a sectional view of the front portion of a vehicle in front of its front passenger seat, for illustrating the configuration of another conventional passenger-side airbag apparatus.

### [Description of the Embodiments]

Embodiments of the present invention will be described with reference to the accompanying drawings.

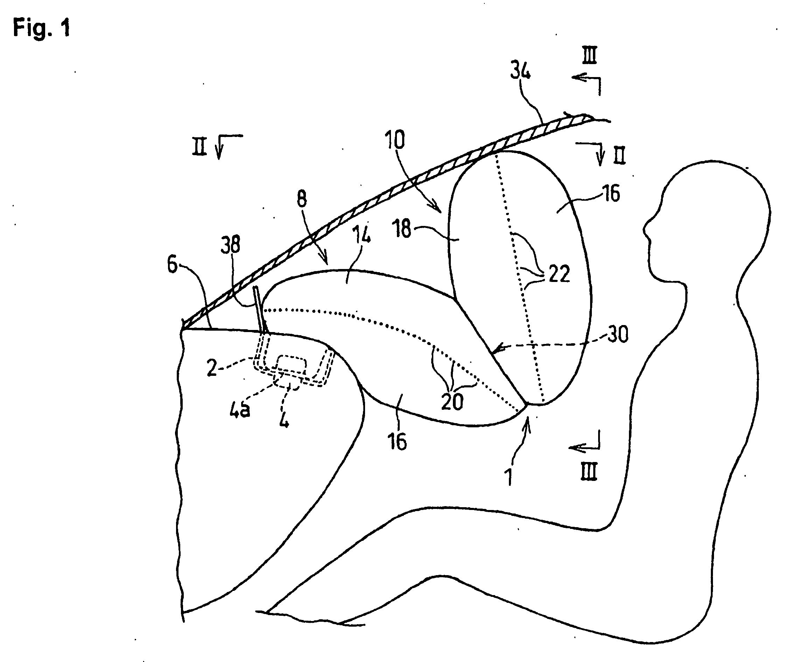

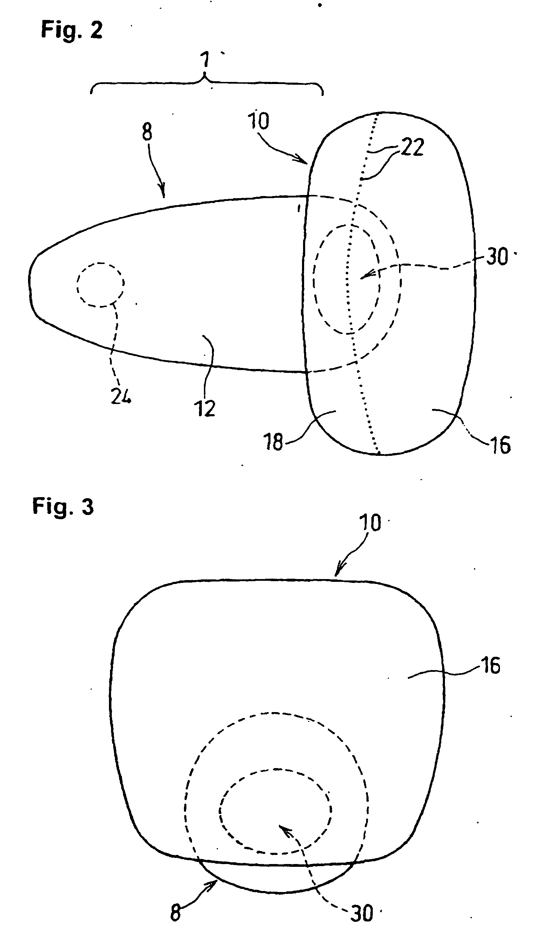

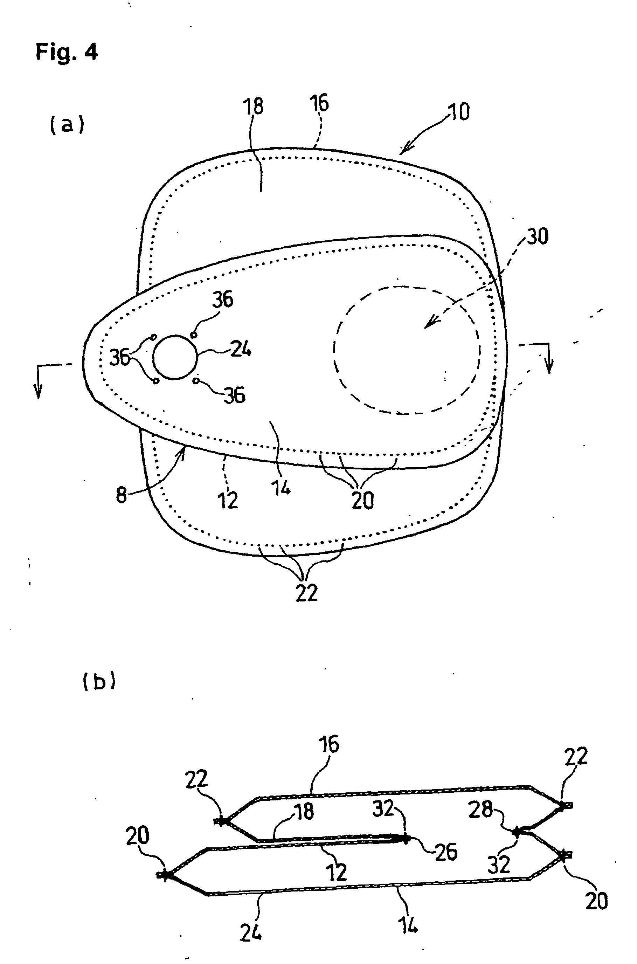

Fig. 1 is a sectional view of the front portion of a vehicle in front of its front passenger seat, illustrating the configuration of a passenger-side airbag apparatus, having a completely expanded airbag, according to an embodiment of the present invention. Fig. 2 is a top view of the expanded airbag viewed from the plane taken along the line II - II indicated in Fig. 1. Fig. 3 is a front view of the expanded airbag viewed from the plane taken along the line III - III indicated in Fig. 1. Also, Fig. 4(a) is a plan view of the airbag which is flatly unfolded in an unexpanded state, and Fig. 4(b) is a sectional view of the airbag taken along the line B - B indicated in Fig. 4(a). In the following description, the front part of the airbag means the part close to a passenger, that is, the right side in Fig. 1, and the rear part of the airbag means the part close to an instrument panel, that is, the left side in Fig. 1.

The passenger-side airbag apparatus has an airbag 1 which expands toward the passenger, a container-shape retainer 2 having an opening, in the upper surface thereof, from which the airbag inflates, and an inflator 4 for inflating the airbag 1. The retainer 2 is installed in a depression (not shown) for installing the airbag apparatus, formed in the upper portion of an instrument panel 6 in front of a front passenger seat (not shown) of the vehicle. The inflator 4 has a flange 4a projecting from the peripheral side surface thereof. The inflator 4 penetrates the bottom of the retainer 2 and is disposed thereto such that the flange 4a overlaps the bottom.

As shown in Fig. 1, the airbag 1 is connected to the retainer 2 at the rear part thereof, and has a first bag 8 which expands from the upper surface of the instrument panel 6 toward the passenger and a second bag 10 which is disposed at the front part of the first bag 8 and which expands so as to face the upper body of the passenger.

As shown in Fig. 4(b), the first bag 8 has an upper panel 12 serving as the upper half thereof and a lower panel 14 serving as the lower half thereof, when it expands, so as to form a bag by overlapping these panels with each other and bonding their peripheries by stitching or the like. Also, the second bag 10 has a passenger-opposing panel 16 facing the passenger and a rear panel 18 serving as rear part thereof, when it expands, so as to form a bag by overlapping these panels with each other and bonding their peripheries by stitching or the like. In Figs. 4(a) and 4(b), the reference numeral 20 represents the bonding line which bonds the upper panel 12 and the lower panel 14, and the reference numeral 22 represents the bonding line which bonds the passenger-opposing panel 16 and the rear panel 18.

The lower panel 14 has an opening 24 in the vicinity of the rear part thereof for introducing the gas in the inflator 4 into the first bag 8. Also, the upper panel 12 has an opening 26 in the vicinity of the front part thereof for allowing the gas introduced in the first bag to flow into the second bag 10. The rear panel 18 has a gas-flow opening 28 at the lower portion thereof corresponding to the opening 26.

By bonding the front part of the upper panel 12 and the lower portion of the rear panel 18 along the peripheries of these openings 26 and 28 by stitching or the like, the first bag 8 and the second bag 10 are connected to each other. Also, by bonding the peripheries of the openings 26 and 28 with each other, a gas-flow port 30 for allowing gas to flow between the first bag 8 and the second bag 10 is also formed. In Fig. 4(b), the reference numeral 32 represents the bonding line, which is formed along the peripheries of the openings 26 and 28, and bonds the upper panel 12 and the rear panel 18.

In the airbag 1, as shown in Fig. 4(a), the lengths of the upper panel 12 and the lower panel 14 of the first bag 8 in the lateral width direction are smaller than those of the passenger-opposing panel 16 and the rear panel 18 of the second bag 10 in the lateral width direction. The passenger-opposing panel 16 and the rear panel 18 have lengths in the height direction such that at least one of the upper portions thereof abuts against a wind-shield 34 or the ceiling of the passenger compartment when the second bag 10 expands. In Fig. 4(a), the lateral width direction of the first bag 8 is illustrated in the vertical direction of the figure, and the lateral width direction and the height direction of the second bag 10 are respectively illustrated in the vertical and horizontal directions of the figure.

The first bag 8 is connected to the retainer 2 such that the periphery of the gas-inflow opening 24 of the lower panel 14 is clamped between the flange 4a of the inflator 4 and the bottom of the retainer 2. These are integrally fixed by through-holes 36 (shown in Fig. 4(a)), formed for bolts, rivets, or the like around the periphery of the opening 24 of the lower panel 14, and fixtures (not shown) such as bolts, rivets, or the like prepared so as to pass through both the flange 4a and the bottom of the retainer 2.

In the passenger-side airbag apparatus having the above-described structure, in a normal situation, the airbag 1 is housed in the retainer 2 in a folded state and the opening disposed in the upper surface of the retainer 2 is closed by a lid 38 which is fixed to the retainer 2 so as to be substantially flush with the upper surface of the instrument panel 6.

In an emergency such as a car crash, the inflator 4 is activated and then the gas in the inflator 4 is introduced into the airbag 1. The introduced gas causes the airbag 1 to push the lid 38 out, to inflate into the passenger compartment, and to expand into the space between the passenger and the instrument panel 6.

Since the gas in the inflator 4 is first introduced into the first bag 8 through the opening 24, firstly, the first bag 8 of the airbag 1 expands from the upper surface of the instrument panel 6 toward the passenger. Then, the gas flows into the second bag 10 from the gas-flow port 30 via the first bag 8, thus causing the second bag 10 to expand so as to face the upper body of the passenger.

In the airbag 1, since the lengths of the upper panel 12 and the lower panel 14 of the first bag 8 in the lateral width direction are made small, the volume of the first bag 8 becomes small and the whole volume of the airbag 1 becomes small correspondingly. With this structure, the airbag 1 quickly completes its inflation even when the inflator 4 does not have a very large capacity.

In the airbag 1, when the first bag 8 and the second bag 10 inflate, only the second bag 10 disposed at the front part of the first bag 8 substantially faces and receives the upper body of the passenger, thereby allowing the first bag 8 to have a small width.

In this embodiment, the first bag 8 has the upper panel 12 and the lower panel 14, which are two-dimensionally stitched together, and has a structure in which the periphery of the gas-inflow opening 24 formed at the rear part of the lower panel 14 is connected to the retainer 2. The conventional airbag 130 described above has a risk of unstable behaviors when it is inflating and completes its inflation. However, in the airbag 1, since the second bag 10, which inflates following the inflation of the first bag 8, abuts against the upper portion of the wind-shield 34 or the ceiling of the passenger compartment so as to support the airbag, the whole expanded airbag 1 behaves stably and accordingly can securely receive the passenger.

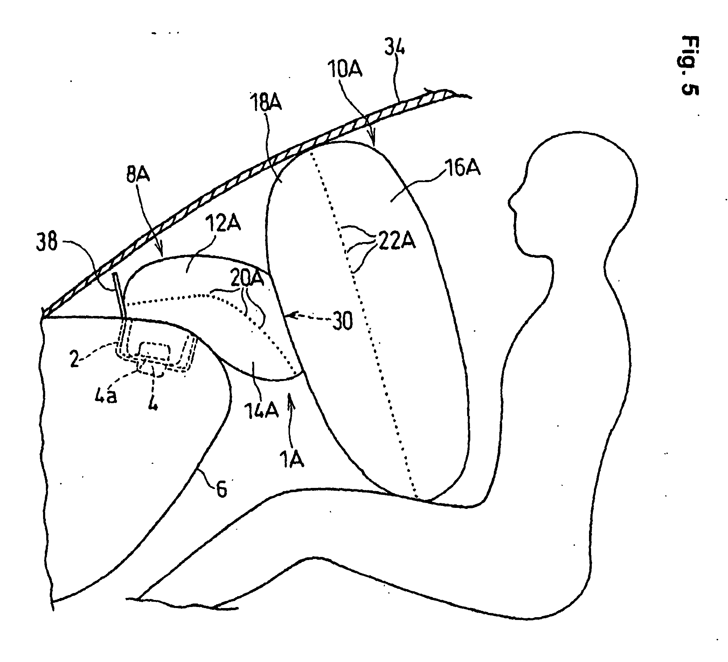

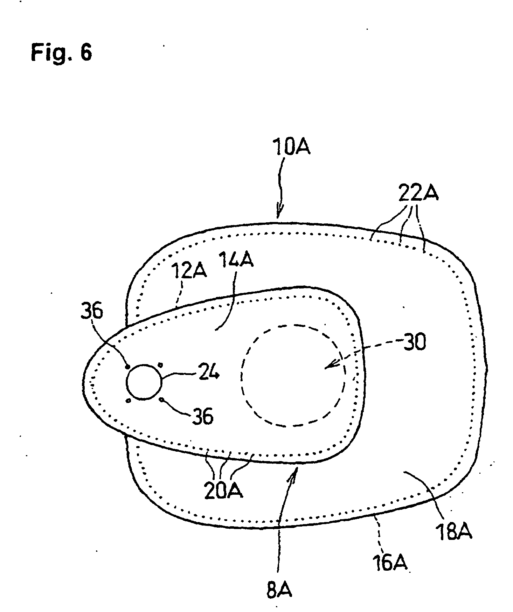

Fig. 5 is a sectional view of the front portion of a vehicle in front of its front passenger seat, illustrating the configuration of a passenger-side airbag apparatus, having a completely expanded airbag, according to another embodiment of the present invention. Fig. 6 is a plan view of the airbag which is flatly unfolded in an unexpanded state.

In an airbag 1A, as shown in Fig. 6, the lower portion of a passenger-opposing panel 16A of a second bag 10A and the lower portion of a rear panel 18A of the second bag 10A extend downwardly (in Fig. 6, the height direction of the second bag 10A is illustrated in the horizontal direction and its down side lies at the right hand of the figure) further than the passenger-opposing panel 16 and the rear panel 18 of the second bag 10 according to the previous embodiment so that the second bag 10A abuts against the thighs of a passenger when it expands, thereby causing the second bag 10A to have a large volume correspondingly.

On the other hand, an upper panel 12A and a lower panel 14A of a first bag 8A have smaller lengths than the upper panel 12 and the lower panel 14 of the first bag 8 according to the previous embodiment in the lateral width direction (in Fig. 6, the lateral width direction of the first bag 8A is illustrated in the vertical direction), thereby allowing the first bag 8A to have a further small volume.

In Figs. 5 and 6, the reference numeral 20A represents the bonding line which bonds the upper panel 12A and the lower panel 14A, and the reference numeral 22A represents the bonding line which bonds the passenger-opposing panel 16A and the rear panel 18A.

Since the other configuration of the airbag apparatus having the airbag 1A is the same as that of the above-described airbag apparatus shown in Figs. 1 to 4, like parts in Figs. 5 and 6 are identified by the same reference numerals as in Figs. 1 to 4 and their description is omitted.

In this passenger-side airbag apparatus, even when the second bag 10A has a relatively large volume, the first bag 8A has a small volume correspondingly, thereby allowing the airbag 1A to have a small volume as a whole. With this structure, the airbag 1A quickly completes its inflation even when the inflator 4 does not have a very large capacity in the same fashion as the airbag 1 according to the previous embodiment.

Also, when the airbag 1A expands completely, it falls into a more stable place due to its shape since the expanded airbag 1A abuts against the thighs of the passenger at the upper portion thereof, in addition to abutting against the wind shield 34 or the ceiling of the passenger compartment at the lower portion thereof.

In each of the passenger-side airbag apparatuses according to the present invention, the inflating behavior of the second bag can be controlled, if necessary, by adjusting the amount of gas flowing into the second bag via the first bag or the direction of gas-flow by varying the open area, or the open shape, of the gas-flow port disposed between the first bag and the second bag.

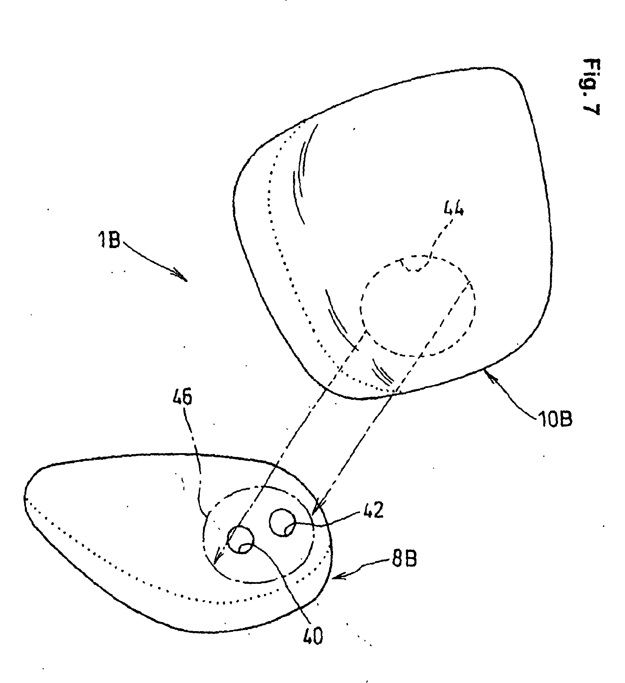

For example, in an airbag 1B according to another embodiment of the present invention shown in Fig. 7, a first bag 8B has two gas-outflow openings 40 and 42 having relatively small diameters at the front part thereof and a second bag 10B has a gas-inflow opening 44 having a size for encircling these openings 40 and 42 at the lower portion of the rear surface thereof. The second bag 10B is bonded to the front part of the first bag 8B along a bonding line 46, by stitching or the like, formed such that the periphery of the opening 44 encircles the openings 40 and 42.

In the airbag 1B having such a structure, the gas flowing into the second bag 10B via the first bag 8B is blocked to flow by the relatively small openings 40 and 42, thereby allowing the airbag 1B to gradually expand out toward the passenger as a whole. In addition, the gas flows into the second bag 10B in a divided manner by passing through these two openings 40 and 42, thereby allowing the second bag 10B to inflate very smoothly.

In each of the above-described embodiments, since the stitching of each pair of panels when manufacturing each airbag can be performed by relatively simple two-dimensionally stitching, the airbag can be manufactured relatively easily and also at a low cost. In addition, the equipment expenses for manufacturing the airbags can be made relatively small.

### [Advantages]

As described above, the present invention provides a passenger-side airbag apparatus having an airbag which has an enough shock-absorbing performance when the airbag expands, quickly completes its inflation without requiring an increased capacity of an inflator, and behaves stably while inflating and when completed its inflation.

## Claims

1. A passenger-side airbag apparatus comprising
an inflator (4); and
an airbag (1; 1a; 1B) which expands toward a passenger, the airbag (1; 1A; 1B) comprising:
a first bag (8; 8A; 8B) which is expanded by gas introduced from the inflator (4) and which expands from the upper portion of an instrument panel (6) of a vehicle toward the passenger; and
a second bag (10; 10A; 10B) which is connected to the first bag (8; 8A; 8B) through an opening (26, 28; 40, 42, 44) allowing the gas introduced from the inflator (4) into the first bag (8; 8A; 8B) to flow into the second bag (10; 10A; 10B) and which expands when the gas flows from the first bag (8; 8A; 8B) into the second bag (10; 10A; 10B) through the opening (26, 28; 40, 42, 44),
wherein the maximum lateral width of the second expanded bag (10; 10A; 10B) is greater than that of the first expanded bag (8; 8A; 8B),
wherein the second bag (10; 10A; 10B) abuts against the upper portion of a wind shield (34), or the ceiling of a passenger compartment, of the vehicle when the first (8; 8A; 8B) and second (10; 10A; 10B) bags expand, and
wherein the second bag (10; 10A; 10B) expands out toward the passenger further than the first bag (8; 8A; 8B) and faces the upper body of the passenger when the expansion of the first bag (8; 8A; 8B) and the second bag (10; 10A; 10B) is completed.

## Patentansprüche

1. Passagierseitige Airbagvorrichtung umfassend
einen Inflator (4), und
einen Airbag (1; 1A; 1B), welcher sich zu einem Passagier hin ausdehnt, wobei der Airbag (1; 1A; 1B) umfasst:
einen ersten Sack (8; 8A; 8B), welcher durch von dem Inflator (4) eingeführtes Gas ausgedehnt wird und welcher sich von dem oberen Abschnitt eines Armaturenbretts (6) eines Fahrzeugs zu dem Passagier hin ausdehnt, und
einen zweiten Sack (10; 10A; 10B), welcher mit dem ersten Sack (8; 8A; 8B) durch eine Öffnung (26, 28; 40, 42, 44) verbunden ist, welche es dem von dem Inflator (4) in den ersten Sack (8; 8A; 8B) eingeführten Gas ermöglicht, in den zweiten Sack (10; 10A; 10B) zu strömen, und welcher sich ausdehnt, wenn das Gas aus dem ersten Sack (8; 8A; 8B) durch die Öffnung (26, 28; 40, 42, 44) in den zweiten Sack (10; 10A; 10B) strömt,
wobei die maximale laterale Breite des zweiten ausgedehnten Sacks (10; 10A; 10B) größer ist als diejenige des ersten ausgedehnten Sacks (8; 8A; 8B),
wobei der zweite Sack (10; 10A; 10B) gegen den oberen Abschnitt einer Windschutzscheibe (34) oder die Decke eines Passagierabteils des Fahrzeugs stößt, wenn sich der erste (8; 8A; 8B) und der zweite (10; 10A; 10B) Sack ausdehnen und
wobei der zweite Sack (10; 10A; 10B) sich weiter nach außen zu dem Passagier hin ausdehnt als der erste Sack (8; 8A; 8B) und dem Oberkörper des Passagiers zugewandt ist, wenn die Ausdehnung des ersten Sacks (8; 8A; 8B) und des zweiten Sacks (10; 10A; 10B) abgeschlossen ist.

## Revendications

1. Dispositif de sac gonflable côté passager comprenant :
- un gonfleur (4) ; et
- un sac gonflable (1 ; 1a ; 1B) comprenant :
- un sac (8 ; 8A ; 8B) qui se dilate vers un passager, le sac gonflable (1 ; 1A ; 1B) comprenant :
- un premier sac (8 ; 8A ; 8B) qui est gonflé par du gaz introduit depuis le gonfleur (4) et qui se dilate à partir de la partie supérieure d'un tableau de bord (6) d'un véhicule vers le passager ; et
- un second sac (10 ; 10A ; 10B) qui est relié au premier sac (8 ; 8A ; 8B) à travers une ouverture (26 ; 28 ; 40 ; 42, 44) permettant au gaz introduit depuis le gonfleur (4) dans le premier sac (8 ; 8A ; 8B) de s'écouler dans le second sac (10 ; 10A ; 10B) et qui se dilate lorsque le gaz s'écoule depuis le premier sac (8 ; 8A ; 8B) dans le second sac (10 ; 10A ; 10B) à travers l'ouverture (26 , 28 ; 40, 42, 44),
dans lequel la largeur latérale maximum du second sac dilaté (10 ; 10A ; 10B) est supérieure à celle du premier sac dilaté (8 ; 8A ; 8B),
dans lequel le second sac (10 ; 10A ; 10B) vient buter contre la partie supérieure d'un pare-brise (34), ou le plafond d'un compartiment passager, du véhicule lorsque le premier (8 ; 8A ; 8B) et le second (10 ; 10A; 10B) sac se dilatent, et
dans lequel le second sac (10 ; 10A ; 10B) se dilate vers le passager davantage que le premier sac (8 ; 8A ; 8B) et fait face à la partie supérieure du corps du passager lorsque l'expansion du premier sac (8 ; 8A ; 8B) et du second sac (10 ; 10A; 10B) est terminée.
